# EUROPEAN PATENT APPLICATION

(11) **EP 3 653 455 A1**
(43) Date of publication of application: **20.05.2020**
(21) Application number: 19209534.7
(22) Date of filing: 15.11.2019
(51) Int. Cl.: B60S 9/12, B66C 23/80, B60S 9/04

(54) **AUTOMATIC LEVELING DEVICE FOR A ROAD VEHICLE**

(30) Priority: 19.11.2018 IT 201800010414
(71) Applicant: Franzoni S.r.l., 40062 Molinella (Bologna) (IT)
(72) Inventor: FRANZONI, Riccardo, 40062 Molinella (BOLOGNA) (IT)
(74) Representative: Persi, Patrizia

(57) **Abstract**

Described is an automatic leveling device for parking a road vehicle, comprising a jack (1) fixed or fixable to the chassis (9) of a road vehicle in a vertical position. The jack (1) ends with a rod (2a) and can be extended in such a way as to lift the vehicle.

The device also comprises an extension (5) made by means of an element separate from the jack (1) and which can be applied in a removable fashion to the rod (2a) by means of a quick coupling.

## Description

This invention relates to an automatic leveling device for parking a road vehicle, in particular applicable to so-called "recreational" vehicles, such as, for example, a camper van, or parked work vehicles.

As known, a vehicle, for example a camper van, may be parked on uneven and/or sloping ground. The vehicle therefore slopes, causing discomfort to the occupants.

To overcome this problem, there are leveling devices which are used to return the vehicle to a horizontal orientation condition.

As is known, these devices comprise feet, generally four in number, each comprising a hydraulic jack in such a way that, when the vehicle is parked on uneven and/or sloping ground, the jacks are elongated in such a way that their lower ends rest on the ground and raise the vehicle to the height useful for returning it to a position in which the inside plane or platform of the vehicle is horizontal.

As is known, when the vehicle is no longer parked and is moved, the jacks must be retracted inside the chassis of the vehicle at a safety height relative to the road surface.

The devices of the type described above have drawbacks in terms of weight, efficiency and control.

Since, during the movement of the vehicle, the jacks must rise to a predetermined height, the vehicle must be fitted with an oil system integrated with the hydraulic system.

The oil system must also be sized relative to the dimensions of the jacks. This results in an increase in the total weight of the vehicle and a consequent increase in fuel consumption. This consequence is extremely disadvantageous in particular in the context of recreational vehicles since they are designed and sized in such a way as to limit as much as possible the weights.

A further drawback derives from the fact that the jacks are particularly bulky and voluminous since they must have considerable length and size to perform the work necessary, therefore requiring corresponding housing spaces inside the overall dimensions of the vehicle.

The technical purpose of the invention is therefore to provide an automatic leveling device which is able to overcome the drawbacks of the prior art. The aim of the invention is to provide an automatic leveling device which is light and compact.

The technical purpose indicated and the aim specified are substantially achieved by an automatic leveling device with the technical features described in one or more of the appended claims. The dependent claims correspond to possible embodiments of the invention.

Further features and advantages of the invention are more apparent in the non-limiting description which follows of a non-exclusive embodiment of an automatic leveling device.

The description is set out below with reference to the accompanying drawings which are provided solely for purposes of illustration without restricting the scope of the invention and in which:
- Figure 1 is a front view of the automatic leveling device in a first configuration;
- Figure 2 is a front view of the automatic leveling device of Figure 1 in a second configuration.

The accompanying drawings show an automatic leveling device for parking a road vehicle according to the invention, comprising a jack 1 fixed or fixable to the chassis 9 of a road vehicle in a vertical position.

The jack 1 can be extended, preferably hydraulically or electrically, in such a way that its stroke is sufficient to perform a suitable lifting of the vehicle.

As illustrated in the accompanying drawings, the jack 1 ends with a rod 2a having one end forming a mechanical abutment 2. The rod 2a defines the movable part of the jack 1 and can therefore come out if the jack 1 is in an extended condition.

Preferably, as shown in the drawings, the mechanical abutment 2 has a transversal dimension greater than the transversal dimension of the jack 1. The device also comprises an extension 5 made by means of an element separate from the jack 1 and which can be applied in a removable fashion to the rod 2a of the jack 1 by means of a quick coupling.

According to a first embodiment, the quick coupling is due to the interaction of magnets 3, 4 positioned, respectively, on the rod 2a and on the extension 5.

More in detail, the extension 5 and the rod 2a can be coupled by magnetic attraction, in particular the rod 2a and the extension 5 have a respective magnet 3, 4 designed to be mutually connected to join the jack 1 to the extension 5.

In fact, the magnets 3, 4 have an opposite polarization in such a way that, with an extension 5 applied on the rod 2a, the magnets 3, 4 exert an attraction between the rod 2a and the extension 5.

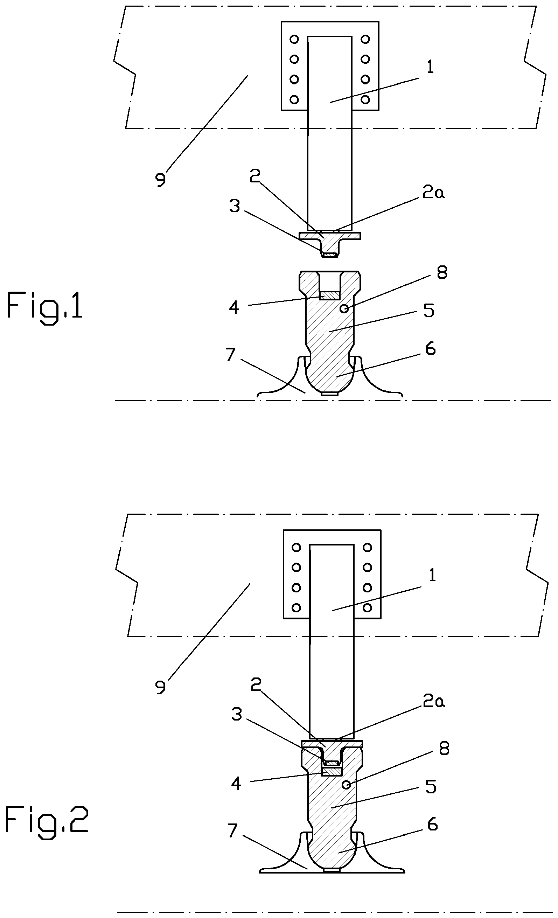

As shown in Figure 1, the extension 5 and the rod 2a are joined together in such a way as to form a single body which is perfectly straight and able to lift the vehicle by a height useful for bringing the latter level.

Moreover, the above-mentioned increased transversal dimension of the mechanical abutment 2 relative to the rod 2a allows an increase in the transversal coupling surface, improving the stability during lifting, in particular avoiding instability due to the combined bending and compressive stress exerted between rod 2a and jack 1.

To impart greater rigidity to the device, the end of the rod 2a can be coupled with the extension 5 by means of a shape fitting.

More specifically, the mechanical abutment 2 has a central protrusion which can be engaged in a corresponding cavity made in the extension 5.

As shown in the accompanying drawings, the magnet 3 of the rod 2a is located at the mechanical abutment 2 defined by the rod 2a, preferably on the central protrusion, whilst the magnet 4 of the extension 5 is located inside the cavity of the extension 5.

In other words, when the extension 5 is engaged on the rod 2a, the magnet 3 of the end of the rod 2a and the magnet 4 positioned on the extension 5 move towards or enter into contact by exerting the attraction action in such a way as to form a perfectly straight single body with a good rigidity.

Advantageously, the cooperation of the quick coupling by the magnets 3, 4 and the shape fitting give the device a good capacity to support the load and good strength even after numerous uses.

According to a different embodiment, not illustrated, the quick coupling is defined by a shape coupling with an undercut in the direction of elongation of the jack 1, for example a dovetail fitting or in any case a "horizontal" fitting, that is to say, with a coupling which is transversal/perpendicular to the direction of elongation of the jack 1. In this way, the extension 5 follows the jack 1 in its lifting and lowering motion.

As shown in the accompanying drawings, the extension 5 has an end equipped with a ball joint 6, in particular the end is positioned on the opposite side with respect to the quick coupling, that is, with respect to the cavity.

The ball joint 6 is housed in a concave seat made on a plate 7 which can rest on the ground. The plate 7 is therefore connected or connectable to the extension 5 by means of the concave seat suitable for housing the ball joint 6.

Advantageously, the ball joint 6 allows an easy adaptation of the device to all irregularities of the ground.

In use, at the moment the vehicle is parked, the extension 5 is positioned beneath the jack 1 and coupled to it by the quick coupling to form an elongation. According to one aspect of the invention, the extension 5 can be manoeuvred by means of a rod for remote coupling of the extension 5 to the jack 1, for example a gripper for remotely gripping, of the type having one end with a manual lever and the other end with two or more gripping elements connected by a kinematic mechanism to the manual lever.

Optionally, the extension may be equipped with a lateral hole 8 which can engage with an operating rod. During this operation, the user can position the extension 5 beneath the jack 1, acting remotely by means of the rod. Thanks to the presence of the ball joint 6, the plate 7 is fully in contact with the ground, irrespective of the configuration of the latter, whilst the extension 5 is always in a position vertically aligned with the rod 2a of the jack 1 and ready to receive, inside the cavity, the mechanical abutment 2. In this way, the single body formed by joining the jack 1 and the extension 5 is perfectly vertical.

In other words, the ball joint 8 ensures that the inclination of the plate 7, due to the ground, is compensated in such a way as to allow the coupling between the jack 1 and the extension 5 along a vertical direction.

Preferably, the plate 7 as well as the extension 5, are made of a plastic material with a high mechanical resistance to compression, for example Nylon or Teflon, whilst the inside of the jack 1 is made from lightweight alloy components.

Advantageously, the lightness of the device allows the weight of the body, formed by the joining of the jack 1 and the extension 5, to be considerably reduced (by approximately 50%) compared with the systems commonly used.

The invention also relates to a method for automatically leveling a road vehicle during parking using a leveling device as described above.

The method comprises preparing a road vehicle having the jack 1 fixed to the chassis of the vehicle in a vertical position, then applying the extension 5 to the jack 1 by means of the quick coupling, in particular in such a way that the protrusion of the rod 2a engages in the cavity of the extension 5, and finally lifting the vehicle by actuating and extending the jack 1 connected to the extension 5.

According to a possible embodiment not illustrated in the accompanying drawings, four jacks 1 are fixed to the chassis of the vehicle in such a way that two jacks 1 are positioned on one side of the chassis and another two jacks 1 are positioned on the opposite side in the chassis. In this configuration, each jack 1 is positioned close to a wheel of the vehicle. When the vehicle is parked, the user couples an extension 5 under each jack 1 in such a way that the respective mechanical abutments 2 are magnetically coupled to the cavities of the respective extensions 5. Subsequently, the rods of the four jacks 1, together with the extensions 5, are lowered until the plates 7 rest on the ground.

If, for example, the vehicle is parked on a slope, the two jacks 1 located close to the front wheels of the vehicle will receive an elongation less than the elongation of the rods of the two jacks 1 located close to the rear wheels.

According to another aspect of the invention, extensions 5 of different lengths can be supplied in a kit in such a way as to increase the lifting lengths which can be obtained, at the same time reducing the lengths of the jacks 1, and therefore their weight.

The invention achieves the above-mentioned aims, eliminating the drawbacks highlighted in the prior art.

In fact, the device as described and claimed has a lower weight which leads to a lowering of the fuel consumption of the vehicle and to avoiding an oversizing of the hydraulic system of the vehicle.

A further advantage is due to the fact that the device has a smaller size since the extension 5 can be disengaged from the jack 1 at the end of the parking requiring reduced spaces for housing the jacks. This also results in better aerodynamics of the vehicle when it is moving.

A further advantage is due to the fact that the device is quick and easy to fit and remove.

## Claims

1. An automatic leveling device for parking a road vehicle, comprising:
- a jack (1) fixed or fixable to the chassis (9) of a road vehicle in a vertical position and which can be extended in such a way as to lift the vehicle, said jack (1) ending with a rod (2a);
- an extension (5) made by means of an element separate from the jack (1) and which can be applied in a removable fashion to the rod (2a) by means of a quick coupling.

2. The device according to claim 1, wherein the extension (5) and the rod (2a) can be coupled by magnetic attraction, in particular each of said rod (2a) and extension (5) having a respective magnet (3, 4) and the magnets (3, 4) of rod (2a) and extension (5) having opposite polarization in such a way that, with the extension (5) applied on the rod (2a), the magnets (3, 4) exert an attraction between rod (2a) and extension (5).

3. The device according to claim 1 or 2, wherein said rod (2a) has an end which can be coupled with the extension (5) and defining a mechanical abutment (2) for the extension (5), preferably said mechanical abutment (2) having a transversal dimension greater than the transversal dimension of the jack (1).

4. The device according to claim 3, wherein said end of the rod (2a) defining the mechanical abutment (2) and the extension (5) can be coupled by shape coupling.

5. The device according to claim 3 or 4, wherein said rod (2a) has, on said end, a central protrusion which can engage in a corresponding cavity made in the extension (5).

6. The device according to claim 5 when it depends on claim 3, wherein the magnet (3) of the rod (2a) is located in the mechanical abutment (2) defined by the rod (2a) and wherein the magnet (4) of the extension (5) is located inside said cavity.

7. The device according to any one of the preceding claims, wherein said extension (5) has an end equipped with a ball joint (6), in particular positioned on the opposite side with respect to said quick coupling, and wherein the device also comprises a plate (7) which can rest on the ground and is connected or connectable to the extension (5) by a concave seat made on the plate (7) and housing said ball joint (6).

8. The device according to any one of the preceding claims, wherein said quick coupling is defined by a shape coupling with an undercut in the direction of elongation of the jack (1).

9. The device according to any one of the preceding claims, wherein the extension (5) and/or the plate (7) are made of a plastic material with a high mechanical resistance to compression, for example Nylon or Teflon, and/or wherein the inside of the jack (1) is made from lightweight alloy components.

10. A method for automatically leveling a road vehicle during parking using a leveling device according to any one of the preceding claims, the method comprising the steps of:
- preparing a road vehicle having said jack (1) fixed to the chassis (9) of the vehicle in a vertical position;
- applying the extension (5) beneath the jack (1) by means of said quick coupling;
- lifting the vehicle by actuating and extending said jack (1) connected to the extension (5).
